# EUROPEAN PATENT APPLICATION

(11) **EP 0 631 106 A2**
(43) Date of publication of application: **28.12.1994**
(21) Application number: 94109573.9
(22) Date of filing: 21.06.1994
(51) Int. Cl.: G01B 11/06

(54) **Apparatus and method for measuring thickness of thin semiconductor multi-layer film**

(30) Priority: 21.06.1993 JP 148839/93
(71) Applicant: MITSUBISHI DENKI KABUSHIKI KAISHA, Tokyo 100 (JP)
(72) Inventor: Nishizawa, Seiji, Hamura-shi, Tokyo (JP); Takashashi, Tokuji, Higashiyodogawa-ku, Osaka-shi, Osaka (JP); Hattori, Ryo, c/o Mitsubishi Denki K.K., Hikari, Itami-shi, Hyogo-ken 664 (JP)
(74) Representative: KUHNEN, WACKER & PARTNER

(57) **Abstract**

The film interference waveform of a wavenumber dispersion (wavelength dispersion) spectrum of the reflected light is obtained from numerical calculation using an optical characteristic matrix by a theoretical interference spectrum calculating means with respective film thickness measured values of a semiconductor device obtained from waveform analysis of the spatial interference waveform as initial values, these calculated values are subjected to waveform fitting with actually measured values by recalculating means, and the theoretical interference spectrum is recalculated while changing the approximate values of the film thicknesses intentionally, whereby high precision respective film thicknesses are obtained. The film thicknesses of respective layers of a thin multi-layer film in submicron can be non-destructively measured exactly and stably with no contact.

## Description

### FIELD OF THE INVENTION

The present invention relates to an apparatus and a method for measuring thickness of a thin semiconductor multi-layer film and, more particularly, to an improvement in an evaluation apparatus for non-destructively measuring thickness of respective layers of a thin multi-layer film that is grown by epitaxial growth of semiconductor crystal without direct contact.

### BACKGROUND OF THE INVENTION

Recently, a thin film technique forming quite a thin film has been advancing. For example, in semiconductor devices, those having various fine pattern structures of submicron level are developed such as semiconductor lasers, GaAs HEMT(high electron mobility transistor)s, and HBT (heterojunction bipolar transistor)s. To produce such semiconductor devices with high reproducibility, particularly in compound semiconductor devices, it is an important control factor to perform film thickness control of a thin multi-layer film during epitaxial crystal growth.

Conventionally, as a method for measuring film thickness to control the film thickness of such a thin film, a method of observing a cleaved cross-section of a sample by SEM (scanning electron microscope) or the like is generally employed. However, since this method is a destructive measurement method that requires etching a sample and, therefore, the sample subjected to the measurement cannot be run on the manufacture line, resulting in significant restrictions to the samples. In these circumstances, a method of measuring film thickness non-destructively employing a film interference method is recently noticed.

The method of measuring film thickness utilizing this film interference method performs film thickness measurement employing a Fourier Transformation Infrared Spectroscopy (hereinafter referred to as FTIR) apparatus having a Fourier transformation processing function and a dispersion type spectroscopy apparatus. This method comprises irradiating a sample with infrared light of a relatively wide wavenumber range from far infrared band to near infrared band having a spectrum wavenumber modulation band at 0 to 32000 cm⁻¹ and, Fourier transforming the interference spectrum from the multi-layer film of the sample by the FTIR apparatus or the like to obtain a space interference waveform (hereinafter referred to as Spatialgram), thereby evaluating the film thickness of the multi-layer film.

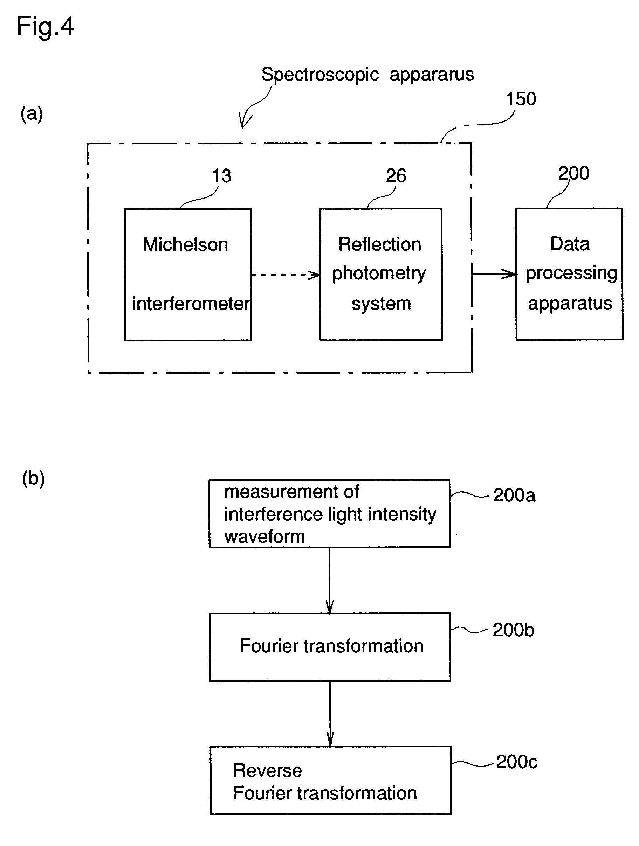

Figure 4 is a block diagram illustrating the whole construction of the FTIR apparatus. In figure 4(a), reference numeral 13 designates a Michelson interferometer emitting an interference light flux that is modulated in view of time. Numeral 26 designates a photometry system for spectrometering the reflected light obtained by irradiating a sample with measuring light from the interferometer 13. Numeral 150 designates a spectroscopy apparatus comprising the Michelson interferometer 13 and the photometry system 26, for continuously spectrometering the reflected light from the multi-layer film in a range from the visible light to the far infrared. Numeral 200 designates a data processing apparatus for Fourier transforming the electric signal that is obtained from the light measurement by the photometry system 26 of the spectroscopy apparatus 150 and performing opto-electricity conversion thereon by the photodetector included in the photometry system 26, and further performs an analysis processing therefor.

Figure 4(b) is a flowchart schematically illustrating the data processing performed by the FTIR apparatus. In the figure, reference numeral 200a designates a step of measuring the interference light intensity waveform. Numeral 200b designates a step of Fourier transforming the interference light intensity waveform measured at the step 200a. Numeral 200c designates a step of reverse Fourier transforming the result obtained by the Fourier transformation at the step 200b.

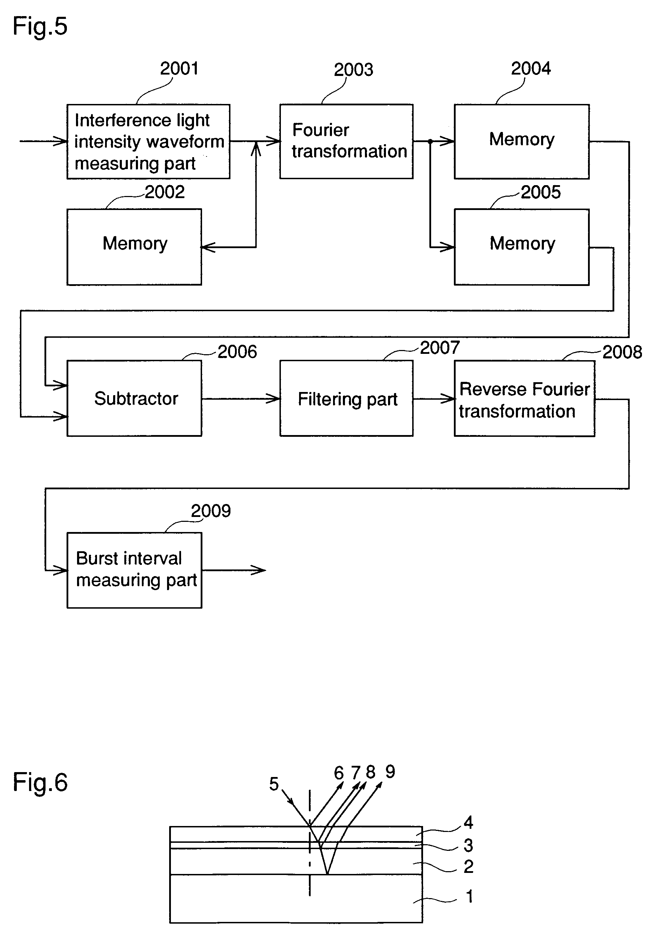

Figure 5 is a block diagram illustrating a construction of this data processing apparatus. In figure 5, reference numeral 2001 designates an interference light intensity waveform measuring section for measuring the interference light intensity waveform from the output of the detector included in the photometry system. Numeral 2002 designates a memory for storing the measured result by the interference light intensity waveform measuring part 2001. Numeral 2003 designates a Fourier transformation part for Fourier transforming the output of the interference light intensity waveform measuring part 2001 or the data from the memory 2002. Numerals 2004 and 2005 designate memories for storing the Fourier transformed results from the Fourier transformation part 2003. Numeral 2006 designates a subtracter for obtaining a difference between the output of the two memories 2004 and 2005. Numeral 2007 designates a filter part for filtering the output of the subtracter 2006. Numeral 2008 designates a reverse Fourier transformation part for reverse Fourier transforming the output of the filter part 2007. Numeral 2009 designates a burst interval measuring part for measuring the burst interval from the output of the reverse Fourier transformation part 2008.

A description is given of the operation with reference to figures 4 and 5. First of all, the sample is irradiated with the interference light flux emitted from the Michelson interferometer 13 and the light reflected by the sample is received by the photodetector included in the reflection light photometry system 26 and, thereafter the received light is converted into an electric signal to obtain an interference light intensity waveform (at step 200a).

This interference light intensity waveform is Fourier transformed (at step 200b) and is subjected to a predetermined filtering processing and, the filtering processed result is reverse Fourier transformed to result a Spatialgram (at step 200c). From the interval between burst peaks in this Spatialgram, the film thickness of a thin film is detected.

A description is given of the processing of this data processing apparatus in detail. First of all, the interference light intensity waveform including the film thickness information of the thin multi-layer film as a sample is measured by the interference light intensity waveform measuring part 2001 on the basis of the electric signal that is forwarded from the detector in the photometry system and, this interference light intensity waveform is Fourier transformed by the Fourier transformation part 2003, resulting a spectroscopied spectrum. In addition, prior to the measurement of the interference light intensity waveform for the sample, the interference light intensity waveform data are measured by the same method on a standard sample which is produced by, for example, evaporating gold on a semiconductor substrate and, this is stored in the memory 2002. Then, the interference light intensity waveform data of the standard sample are read out from the memory 2002 as required, and this is Fourier transformed, resulting the spectroscopied spectrum. From the spectroscopied spectrum of the thus obtained thin multi-layer film sample, the spectroscopied spectrum of the standard sample is stored in the memories 2004 and 2005, and the contents of the memories are input to the subtracter 2006 to obtain a difference spectrum, and the difference spectrum in the noise wavenumber band is subjected to filtering on the data value in the filtering part 2007 as a noise processing. The difference spectrum obtained by performing the noise processing is reverse Fourier transformed by the reverse Fourier transformation part 2008, thereby resulting a Spatialgram called as a Kepstrum. In the Kepstrum, there appear bursts due to that all the respective reflected light components intensify with each other by interfering with each other at positions where the optical path length differences due to differences between the running positions of the moving mirror coincide with the optical path length differences between the respective reflected light components from the sample. These distances between respective bursts correspond to the optical path length differences between respective reflection light components. Accordingly, by measuring the distance between the bursts by the burst interval measuring part 2009, the optical path length differences are obtained, and the film thickness of respective layers are obtained.

By performing the waveform analysis on the Kepstrum obtained utilizing the Fourier analysis as such, the film thicknesses of respective layers of the thin multi-layer film are obtained.

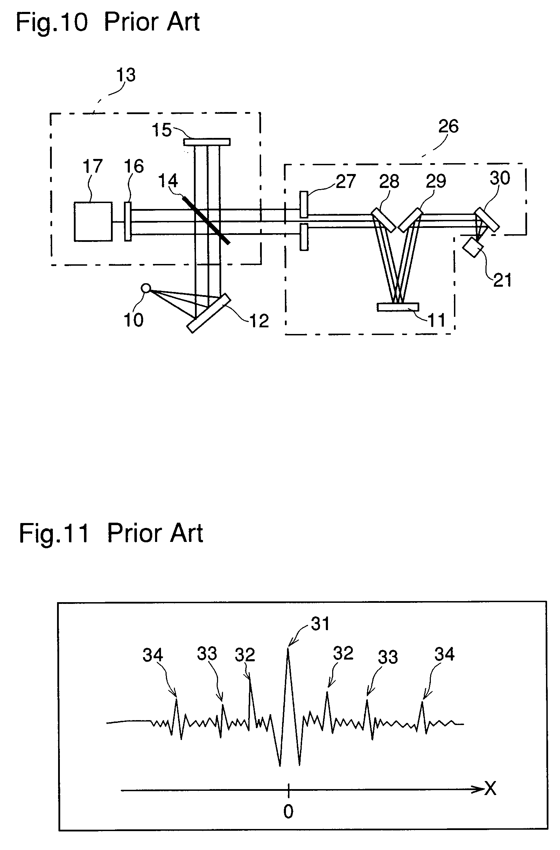

This prior art film thickness measuring method employing FTIR method will be described with reference to figure 10 showing a conceptual diagram of the optical system.

In figure 10, reference numeral 10 designates a light source emitting a light irradiating the sample. Reference numeral 12 designates a non-spherical mirror converting the light from the light source 10 into a parallel light beam. Numeral 14 designates a beam splitter for dividing the parallel light beam incident from the non-spherical mirror 12 into two. Reference numeral 15 designates a fixed mirror reflecting the light transmitting through the beam splitter 14. Reference numeral 16 designates a moving mirror reflecting the light reflected by the beam splitter 14. Numeral 17 designates a driver for scanning the moving mirror 16 at a constant speed. Reference numeral 13 designates a Michelson interferometer generating an interference light flux comprising the beam splitter 14, the fixed mirror 15, the moving mirror 16, and the driver 17.

Reference numeral 27 designates an aperture for limiting the magnitude of the light flux of the interference light emitted from the beam splitter 14 of the Michelson interferometer 13. Reference numeral 28 designates a plane mirror reflecting the parallel light beam emitted from the aperture 27 to change its direction. Reference numeral 11 designates a sample to which the parallel light beam emitted from the plane mirror 28 is irradiated. Reference numeral 29 designates a plane mirror reflecting the parallel light beam reflected by the sample 11 to change its direction. Reference numeral 30 designates a non-spherical mirror to which the parallel light beam from the plane mirror 29 is incident. Reference numeral 21 designates a detector for detecting the light collected by the non-spherical mirror 30. Reference numeral 26 designates a reflection photometry system for photometering the sample, comprising; the aperture 27, the plane mirror 28, the sample 11, the plane mirror 29, and the non-spherical mirror 30.

A description is given of the operation. The light flux emitted from the light source 10 is converted into a parallel light beam by the non-spherical mirror 12, and is introduced into the Michelson interferometer 13. The Michelson interferometer 13 includes the beam splitter 14 for dividing the incident parallel light beam into two, the fixed mirror 15 reflecting the transmitting light of the beam splitter 14, and the moving mirror 16 reflecting the reflected light by the beam splitter 14 which is scanned at a constant speed by the driver 17. The transmitting light and the reflecting light of the beam splitter 14 are respectively reflected by the fixed mirror 15 and the moving mirror 16, and again returned to the beam splitter 14, and synthesized on that plane to interference with each other. This interference light is an interference light flux that is modulated in view of time by the constant speed scanning of the moving mirror 16, and it is taken out to the side of the aperture 27 for reflection photometry. The parallel light beam taken out of the Michelson interferometer 13 is reformed to be of an arbitrary magnitude by the aperture 27 and then changes its direction by the plane mirror 28, and this parallel light beam is irradiated to the surface of the sample 11. The reflected light beam reflected by the sample 11 is subjected to the interference due to the film construction of the sample 11, it changes its direction by the plane mirror 29, and is collected on the light receiving surface of the detector 21 by the non-spherical mirror 30.

Figure 6 shows the reflection light paths of only one-dimensional reflected light at respective layers of the light flux incident to the sample by the reflection photometry system of the Michelson interferometer shown in figure 10. In figure 6, reference numeral 1 designates a semiconductor substrate, and reference numerals 2, 3, and 4 designate thin semiconductor films successively laminated on the semiconductor substrate 1 in this order. Reference numeral 5 designates an incident light incident to the sample emitted from the Michelson interferometer. Numeral 6 designates a reflected light reflected at the surface of the thin semiconductor film 4 as the uppermost layer of the sample. Numeral 7 designates a reflected light reflected at the interface between the thin semiconductor film 4 and the thin semiconductor film 3. Numeral 8 designates a reflected light reflected at the interface between the thin semiconductor film 3 and the thin semiconductor film 2. Numeral 9 designates a reflected light reflected at the interface between the thin semiconductor film 2 and the semiconductor substrate 1.

Suppose that the film thicknesses and refractive indices of the thin semiconductor films 2, 3, and 4 are respectively, (d₁, n₁), (d₂,n₂), and (d₃, n₃), and the refractive index of the substrate 1 is nₛ. The light reflected by respective layers produce phase differences due to respective optical path lengths, and they are synthesized at the surface of the sample 11 to interfere with each other. The optical path length difference δᵢ of the reflected light component reflected at the interface between the i-th layer and (i+1)-th layer against the reflected light component 5 at the surface of the sample 11 is given by the following formula (1). 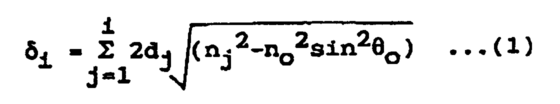
The film thickness information of respective layers are obtained from the analysis of the interference light intensity waveform of the reflected light utilizing the phase difference on the basis of the δᵢ.

Generally, a method of evaluating the film thickness from the analysis of the interference fringes of the reflected interference spectrum of a thin film is adopted. In this method, however, although it is effective in a case where the film comprises a single layer, when the film comprises a plurality of layers, it is quite difficult to separate and analyze each of the fringes and it is not practical. Therefore, the Fourier analysis is utilized, i.e., the film reflection interference spectrum is filtered on the data value for the noise wavenumber band, and the filtering result is reverse Fourier transformed to obtain a Spatialgram corresponding to the moving distance of the moving mirror 16. In the Spatialgram, respective bursts appear by that all the lights intensify with each other by the interferences at positions where the optical path difference corresponding to the scanning position of the moving mirror 16 coincides with the optical path length difference of respective reflection light components that is represented in formula (1), and the distances between respective bursts correspond to the optical path length differences between respective reflected lights.

Figure 11 shows a Spatialgram obtained from the reflected light shown in figure 6. The abscissa represents traveling distance of the moving mirror 16 and the ordinate represents reflected light interference intensity. In the figure, the center burst 31 corresponding to the reflected light component 6 at the surface of the sample 11 appears as an origin, and symmetrically at the left and right thereof the reflected light components 7, 8, and 9 of respective layers produce respective side burst peaks 32, 33, and 34. Provided that the distances from the center burst 31 to the respective side burst peaks are Lᵢ (i=1, 2, 3), an optical path length difference δᵢ between the respective reflected light components coincides with 2Lᵢ as a sum of going path and return path to and from the moving mirror 16. Therefore, the following equation is obtained from the above-described formula (1): 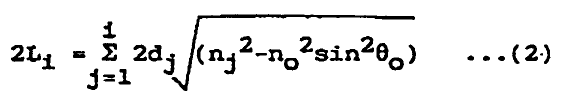
By performing a waveform analysis of Kepstrum that is obtained by reverse Fourier transforming the reflected interference light of the multi-layer film, it is possible to obtain film thickness information of respective layers of the multi-layer film.

However, in this prior art method, the thin film measurement limit (dₗᵢₘᵢₜ) is determined by the formula (3) according to the photometry wavenumber range Δ .

${\text{d}}_{\text{limit}} \text{= 1 / (2 · Δ · n) (3)}$

This is equivalent to that the fringe interval in the interference wavenumber in the wavenumber (or wavelength) space of the single layer film having a film thickness d and a refractive index n, corresponds to 1/(2 · d · n), and this shows that the film thickness separation limit in the Spatialgram of the multi-layer film requires information of the interference component of respective films corresponding to one interference fringe in the wavenumber space.

Accordingly, the film thickness measuring limit of a thin film is determined by the photometry wavenumber range that is determined by the photometry system and the material absorption of the measured multi-layer film.

Conventionally, with respect to the transmission characteristics of the light of the photometry system, Japanese Published Patent Application No. Hei.4-109798 discloses one that is responsive to a wider wavenumber range by the improvement in the optical parts and employing composite material including materials having different transmission wavenumber bands by, for example, having a light source, an optical system, and a light receiving part for common use which have wavenumber characteristic ranges mutually overlapping with each other.

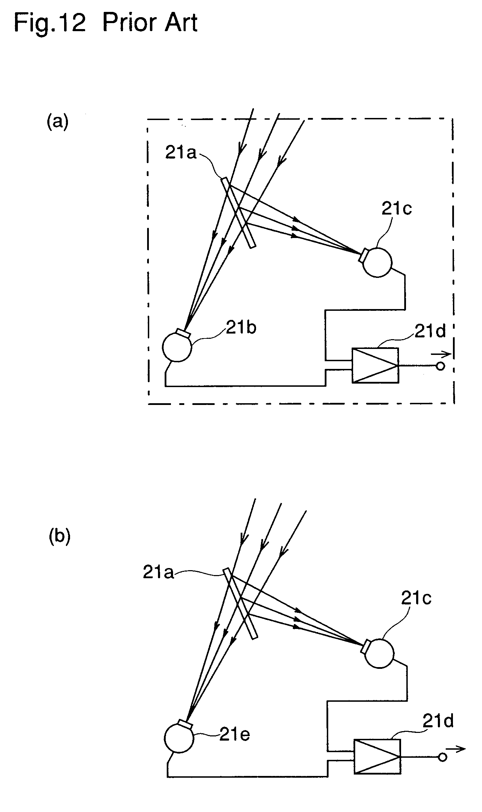

Figure 12(a) shows a construction of an optical detector of a thin semiconductor multi-layer film thickness measuring apparatus having a light source, an optical system, and a light receiving part for common use which have wavenumber characteristic ranges mutually overlapping with each other. In the figure, reference numeral 21a designates a beam splitter for splitting the light beam collected by the light collecting mirror. Reference numerals 21b and 21c designate a mercury cadmium telluride (MCT) detector and a silicon detector which convert the light divided by the beam splitter 21a into an electric signal. Reference numeral 21d designates an electric signal synthesizer circuit synthesizing electric signals obtained by the MCT detector 21b and the silicon detector 21c, respectively.

By constructing the photodetector as such, the detection sensitivity of the detector amounts to the sum of the sensitivity characteristic of the MCT detector and the sensitivity characteristic of the silicon detector, whereby enlarging of the sensitivity characteristics is improved that cannot be performed by a single photodetector.

As shown in figure 12(b), the MCT detector 21b can be replaced by a low cost tri-glycine sulfate (TGS) detector 21e. In this case, since parts for the means cooling the MCT detector are not required, the apparatus is simplified and production cost is reduced.

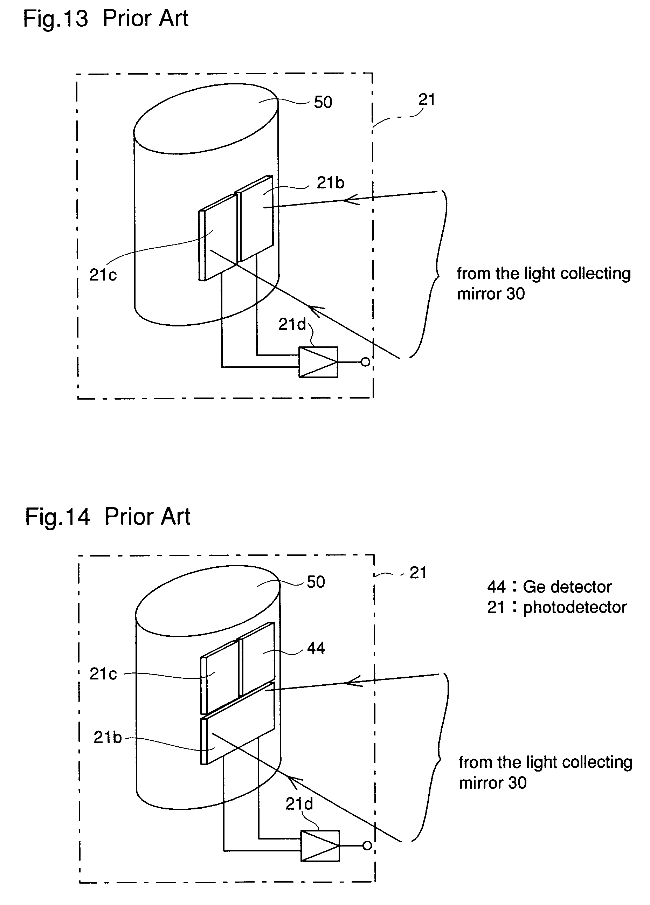

Figure 13 shows an improvement of the photodetector shown in figure 12(a), the MCT detector 21b and the Si detector 21c are fixed with epoxy resin or the like in a liquid nitrogen cooler 50 which cools the MCT detector 21b and are arranged on the same plane. A photometric light beam is collected by a collecting mirror 30 and enters directly into both of the MCT detector 21b and the Si detector 21c, and is detected at the same time. Then, the electric signals output from the detector are synthesized in the electric signal synthesizer circuit 21d.

Employing such a construction, influences due to the transmission characteristic of the beam splitter disappear and the photometric wavenumber ranges of both the detectors 21b and 21c are obtained more immediately, resulting in enhancing the photometry precision.

In figure 14, three kinds of photodetectors are employed as a complex photodetector.

By arranging a germanium (Ge) detector 44 on the same plane as the MCT detector 21b and the Si detector 21c, the sensitivity valley of synthetical sensitivity characteristic of both the MCT detector 21b and Si detector 21c is interpolated. It is desirable to employ an MCT detector having a larger area than other detectors because the MCT detector 21b is inferior in sensitivity to other detectors. Such a construction provides a photodetector having a high sensitivity and a wide photometric wavenumber range.

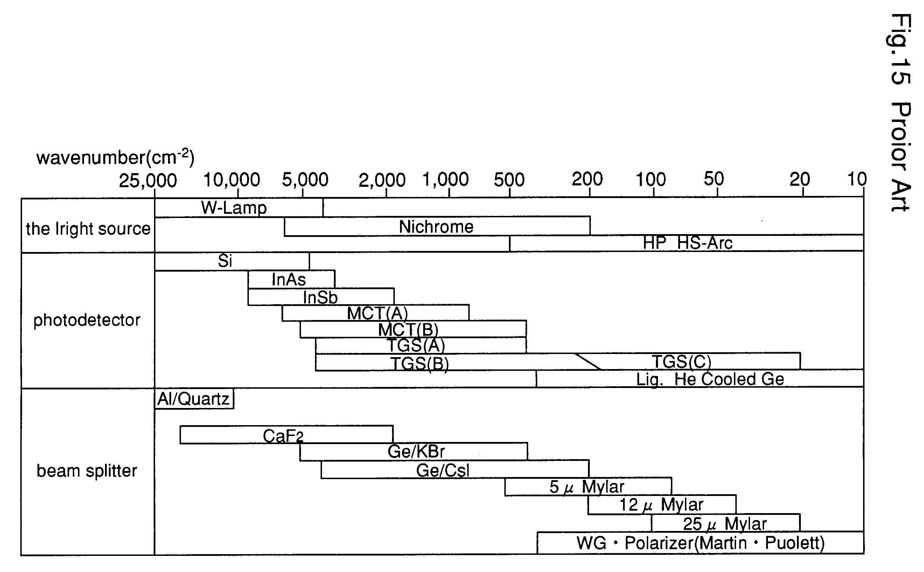

Figure 15 shows a chart representing wavenumber characteristic ranges of various kinds of light sources, photodetectors, and beam splitters. In the column of photodetector, according to the sum of the wavenumber characteristic ranges of both the MCT detector and the Si detector, possibility of detection over a wide range from around 25000 cm⁻¹ to 500 cm⁻¹ is presented. This suggests that light in a range from visible light (blue light) to far infrared light is possibly detected by a photodetector of a complex type incorporating an MCT detector and a Si detector for optimization. In figure 15, subscripts A, B, or C in parentheses represent photodetectors comprising the same material but with a different composition ratio.

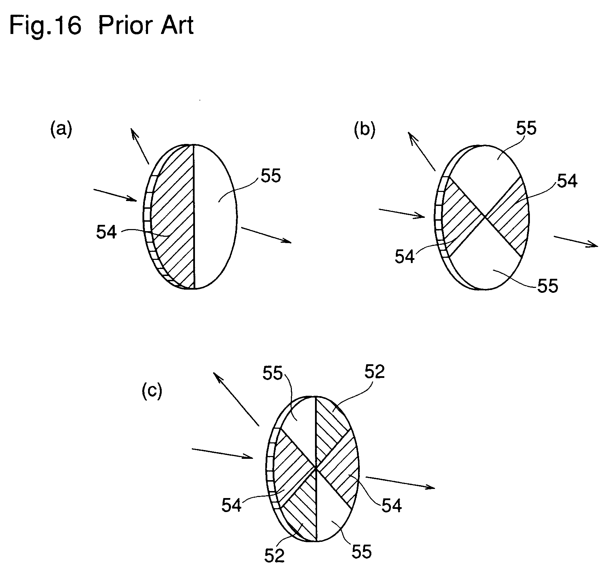

Figure 16 shows an improvement of a beam splitter, figure 16(a) and 16(b), respectively, show light transmission members corresponding to the beam splitter. In both constructions of figure 16(a) and 16(b), reference numeral 54 designates a region comprising calcium fluoride (CaF₂) and numeral 55 designates a region comprising quartz (SiO₂). By employing two materials having different light transmission bands for respective halves of the light transmission area of the beam splitter, the characteristic wavenumber range of those as a beam splitter is enlarged to that corresponding to a sum of the respective characteristic wavenumber ranges of the two materials when employed singly. In the above-described construction, according to the column of the beam splitter in the table chart of figure 15, the aggregate wavenumber characteristic range of the beam splitter employing calcium fluoride (CaF₂) and quartz (SiO₂) is approximately from 25000 cm⁻¹ to 2000 cm⁻¹. In addition, the construction of figure 16(b) having more than two different material regions for the respective sectioned areas arranged alternatively can reduce destruction of wavefront of transmitting light beam to a larger extent than the construction of figure 16(a) having two different material regions for the half-sectioned areas, thereby providing a more uniform in-plane beam intensity.

The beam splitter may comprise three materials as shown in figure 16(c). In this construction of figure 16(c), a calcium fluoride (CaF₂) region 54, a quartz (SiO₂) region 55 and a potassium bromide (KBr) region 52 are arranged at the triple-sectioned areas of the light transmission region. According to the column of the beam splitter of figure 15, the beam splitter including three materials of calcium fluoride, quartz and potassium bromide enables to perform optical measurement in the wavenumber range of approximately from 25000 cm⁻¹ to 400 cm⁻¹, thereby enlarging the long wavelength band to a larger extent than the construction employing two materials as shown in figure 16(a) and 16(b).

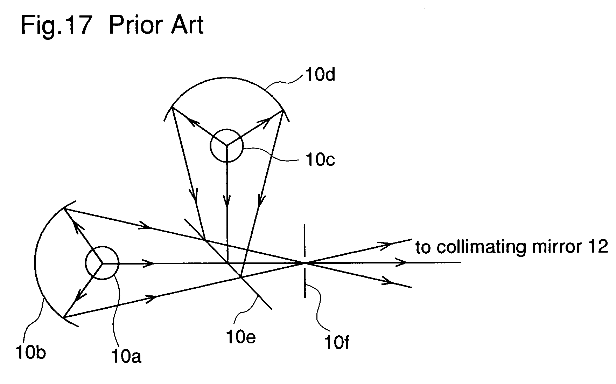

In addition, a system in which the light source is improved as shown in figure 17 may be employed. In figure 17, light beams from a tungsten halogen lamp 10a and a nichrome luminous lamp 10c are collected by collecting mirrors 10b and 10d, respectively, and they are synthesized through a beam splitter 10e. The synthesized beam is reformed by an aperture 10f to be a collected light source and it is introduced into the collimating mirror 12. Since the optical path lengths from the aperture 10f to the respective lamps 10a and 10c are equal to each other, the respective light beams from the lamps which are synthesized at the beam splitter 10e have the same wavefronts at the aperture 10f and become one parallel light beam at the collimating mirror 12.

By combining the tungsten halogen lamp 10a and the nichrome luminous lamp 10c and synthesizing the outgoing light therefrom, it is possible to irradiate with a light beam of the wavenumber range from 25000 cm⁻¹ to 200 cm⁻¹ as shown in the column of light source of figure 15.

With respect to the photometering light beam, Japanese Published Patent Application No. Hei.3-110405 discloses an improvement in which the photometering light is irradiated to the substrate without being collected but as a parallel light beam, whereby the variation in the incident light to the sample and the variation in the incident surface are reduced, and a Kepstrum including correct information of the thin multi-layer film is obtained, as shown in figure 10.

Japanese Published Patent Application No. Hei.4-66806 discloses a data processing apparatus for processing a signal that is converted into an electric signal by a light receiving part. In this apparatus, the measured value of the photometered spectrum is supplemented with data of a constant value in the wavenumber bands exceeding the high band side and the low band side to be subjected to a Fourier transformation, whereby generation of a quasi-peak is suppressed.

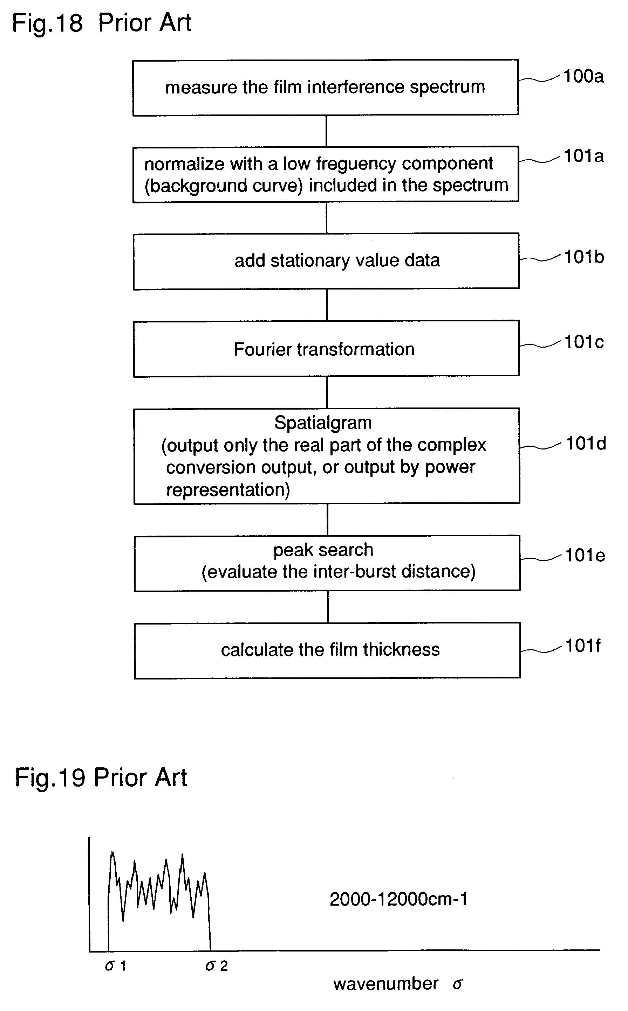

Figure 18 shows a flowchart illustrating the content of the processing performed by the data processing apparatus supplementing data of a constant value prior to the Fourier transformation.

In figure 18, the film interference spectrum is measured by the FTIR apparatus according to a conventional method (at step 100a).

The low frequency component included in the thus obtained spectrum is removed (at step 101a), resulting a film interference spectrum as shown in figure 19.

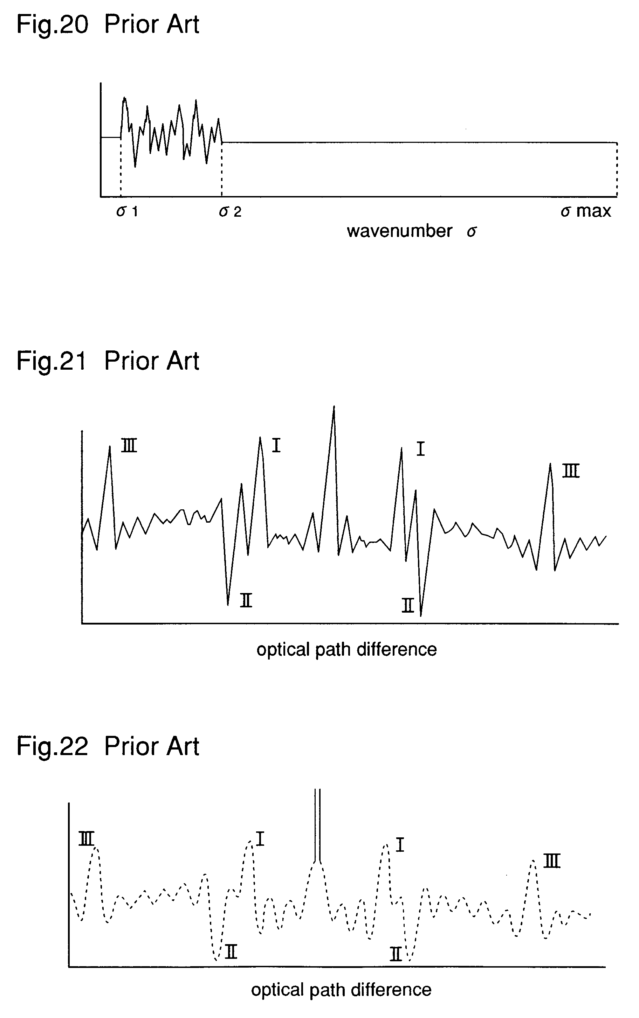

In this embodiment, a step of adding spectrum data that is obtained by performing processing on the waveform data (at step 101b) is added. More particularly, as shown in figure 20, the reflection interference spectrum intensity data at the left side end part (wavenumber σ₁=2000 cm⁻¹) of the interference spectrum is supplemented as interference spectrum intensity data from 0 to σ₁ cm⁻¹, and the spectrum intensity data of the right side end part in the figure (wavenumber σ₂=12000 cm⁻¹) is supplemented as reflection interference spectrum intensity data from the wavenumber σ₂ to σₘₐₓ cm⁻¹.

Subsequently, the reflection interference spectrum data after the waveform data processing is performed, that is shown in figure 20 is Fourier transformed (at step 101c), thereby obtaining a Spatialgram as shown in figure 21 (at step 101d).

The peaks of this Spatialgram are searched (at step 101d), and from the interval between the peaks the film thickness is calculated (at step 101f ).

When the Spatialgram shown in figure 21 is compared with a Spatialgram that is obtained without performing such data supplementation, regardless that the reflection interference spectrum of the same wavenumber range is obtained from the same semiconductor triple-layer film, the side bursts corresponding to respective film thicknesses, are much clarified in figure 21, whereby quasi-peaks are suppressed to a great extent.

Figure 22 shows a power spectrum corresponding to the Spatialgram shown in figure 21. Of course, even in figure 22, the peak values I, II, III representing respective film thicknesses are much clarified, and there causes no obstacle to the automatization of the film thickness operation.

Even when the Spatialgram shown in figure 21 is compared with a Spatialgram that is obtained without performing such data interpolation, the position of the side burst in the abscissa does not change at all. Therefore, even when the reflection interference spectrum of a relatively narrow wavenumber range is employed, a correct film thickness measurement can be performed.

Japanese Published Patent Application No. Hei.4-120404 discloses one in which the reflection spectrum that is obtained by a Fourier transformation is subjected to a complex power reverse Fourier transformation, thereby clarifying the peaks by making all the burst waveforms of the same phases, whereby the film thickness measuring precision is improved.

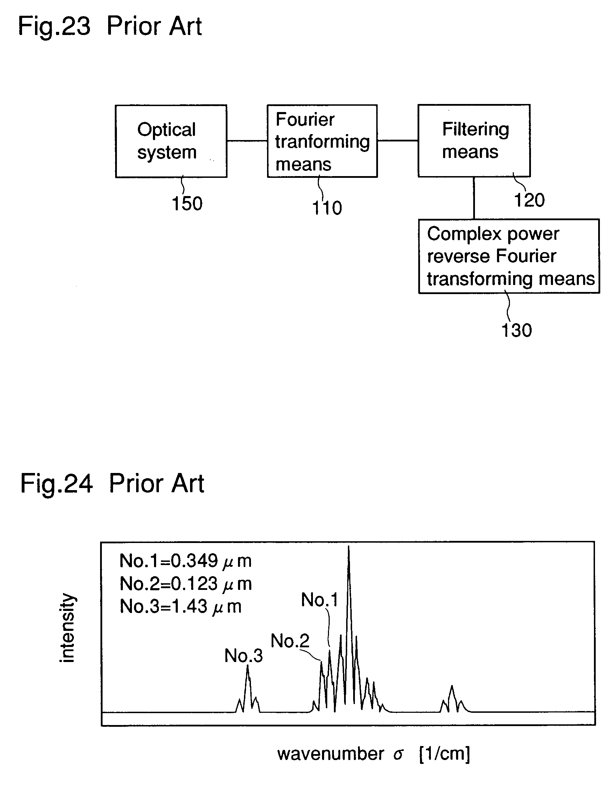

Figure 23 shows a flowchart illustrating the content of the processing performed by the data processing apparatus, including such a complex power reverse Fourier transformation as a reverse Fourier transformation.

In the figure, reference numeral 150 designates an optical system which continuously irradiates the interference light flux having different wavenumbers to the sample including a thin semiconductor multi-layer film, and the interference light flux reflected by the sample is detected to produce an interferogram. Reference numeral 110 designates a Fourier transforming means for Fourier transforming the interferogram that is obtained by performing opto-electricity conversion on the light signal by the photodetector included in the optical system 150 to obtain a reflected light spectrum. Reference numeral 120 designates a filtering means for performing filtering processing on the Fourier transformed signal that is obtained by the Fourier transformation means 110. Reference numeral 130 designates a complex power reverse Fourier transformation means for performing a complex power reverse Fourier transformation on the reflection spectrum that is obtained by performing filtering processing by the filtering means 120 to obtain a space interference waveform.

In this embodiment, the reflection spectrum that is obtained by the filtering processing is subjected to the complex power reverse Fourier transformation by the complex power reverse Fourier transformation means 130 to obtain a space interference intensity waveform.

This complex power reverse Fourier transformation means 130 obtains the space interference intensity waveform by the reverse Fourier transformation employing the composite power transformation including the cosine term and the sinusoidal term as represented by the formula (4): 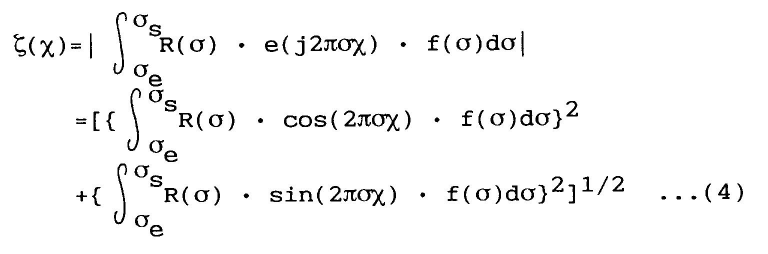
Next, the film thickness of the sample comprising a thin semiconductor multi-layer film formed on a semiconductor substrate is measured and it is evaluated. The sample comprises a GaAs substrate as a semiconductor substrate on which AlₓGa₁₋ₓAs (x=0.5, 0.85 µm thick), Alₓ Ga₁₋ₓAs (x=0.1, 0.1 µm thick), and AlₓGa₁₋ₓAs (x=0.5, 1.4 µm thick) as thin semiconductor films are grown. The space interference intensity waveform obtained by the complex power reverse Fourier transformation means 130 is shown in figure 24. In the conventional cosine reverse Fourier transformation, two burst waveforms overlap with each other to produce an asymmetric waveform, whereby it is difficult to analyze the peak position. In addition, since this asymmetric waveform is sensitive to the filtering condition at the reverse Fourier transformation and it changes its shape finely, it is actually impossible to find the peak among this waveform and obtain the film thickness.

On the other hand, in the space interference waveform shown in figure 24, although the peak position interval corresponds to 0.1 µm, the burst waveforms are clearly separated and a space interference intensity waveform that is sufficiency stable for being employed in the actual film thickness measurement is obtained.

Since the space interference intensity waveform obtained by the complex power reverse Fourier transformation includes more information than that obtained by the conventional cosine reverse Fourier transformation and respective burst waveforms have all the same phases, the precision in the film thickness measurement is increased. For example, in the photometering condition having a measurement limit of 0.2 µm, the film thickness measurement up to a thin film of 0.1 µm thickness is possible.

Regardless of the above-described various efforts as already described, however, the high frequency light transmission limit νₕ is determined by the band end absorption in the semiconductor crystal as material to be measured while the low frequency limit ν₁ is determined by the lattice vibration absorption in crystal, thereby limiting the measured light wavenumber range ${\text{Δ = ν}}_{\text{h}} {\text{ν}}_{\text{l}}$ , which results in a physical limit in the high precision of dₗᵢₘᵢₜ.

For example, the band end absorption wavenumber of Alₓ Ga₁₋ₓAs crystal (x=0.45) is 16500 cm⁻¹, the lattice vibration absorption is about 1500 cm⁻¹, and then Δ becomes 15000 cm⁻¹. When this is applied in the formula (3), the dₗᵢₘᵢₜ becomes about 0.1 µm. In other words, in the prior art technique, the thin film measuring limit is determined by the material absorption of semiconductor, thereby resulting in a limitation in the film thickness measurement of about 0.1 µm film thickness.

### SUMMERY OF THE INVENTION

It is an object of the present invention to provide an apparatus and a method for measuring thickness of a thin semiconductor multi-layer film thickness utilizing infrared light interference method that can non-destructively measure film thickness in submicron of respective layers of the thin multi-layer film at high precision and stably without contact.

Other objects and advantages of the present invention will become apparent from the detailed description given hereinafter; it should be understood, however, that the detailed description and specific embodiment are given by way of illustration only, since various changes and modifications within the scope of the invention will become apparent to those skilled in the art from this detailed description.

According to the present invention, an apparatus for measuring thickness of a thin semiconductor multi-layer film includes means for irradiating a multi-layer semiconductor film with light of a wavenumber range from a visible light to an infrared, means for measuring the multi-layer thickness employing Fourier transformation film thickness measuring method that measures respective film thicknesses from a waveform analysis of the Spatial interference waveform that is obtained from the Fourier transformation of film interference component included in the reflected light, means for setting respective measured values of film thickness obtained from the waveform analysis of the Spatial interference waveform as initial values, means for obtaining a film interference waveform of one of wavenumber dispersion spectrum and wavelength dispersion spectrum of reflected light from numerical calculation using the optical characteristic matrix, and a data processing apparatus for obtaining respective thicknesses of high precision from waveform fitting of the calculated values with the measured values.

Since the indefinite measuring value of the film thickness of the upper layer or lower layer is intentionally changed to detect the optimum fitting waveform, even when the interference fringes are included by only below one half of that of thin film portion in the measuring wavenumber range, it is possible to perform a waveform fitting of interference waveform of the entirety of the multi-layer film, and the measurement of a thin film which is not limited in the measuring wavenumber range is enabled.

According to a first aspect of present invention, a thin semiconductor multi-layer film thickness measuring apparatus includes a first memory storing refractive index distribution and wavenumber dispersion data of respective layers of a multi-layer film, a spectroscopic apparatus for spectroscopically measuring successively the reflected light from the lower layer film in a range from the visible light to the far infrared light, a film interference spectrum operating means for forming interference spectrum from the spectroscopied spectrum measured by this spectroscopic apparatus by removing the optical transmitting characteristic of the spectroscopic apparatus to take out only a multi-layer film interference component, a second memory means for storing the interference spectrum which is obtained by only taking out the multi-layer interference component which is produced by the film interference spectrum operating means, a Spatialgram calculating means for calculating the Spatialgram by reverse Fourier transforming only the sensitivity wavenumber band of the interference spectrum from which the optical transmitting characteristics of the spectroscopic apparatus is removed, a third means for storing Spatialgram which is calculated by this Spatialgram calculating means, a film thickness approximate value calculating means for calculating the side burst peak position of the Spatialgram and approximate values of respective film thicknesses by reading out the refractive index distribution of respective layers from the first memory means, a fourth memory means for storing the approximate values of respective thicknesses that are calculated by this film thickness approximate value calculating means, a theoretical interference spectrum calculating means for calculating the theoretical interference spectrum by the characteristic matrix calculation on the basis of the refractive index distribution and wavenumber dispersion data of respective layers, and a recalculating means for changing the film thickness set values of respective layers so as to minimize the difference between the interference spectrum and the theoretical interference spectrum and recalculating the theoretical interference spectrum to assume the real film thickness. Accordingly, by obtaining the approximate values of film thicknesses, producing the theoretical interference spectrum waveforms from the numerical calculation of the optical characteristic matrix, and performing a waveform fitting with the original interference spectrum waveform while changing the film thickness, whereby it is enabled to enhance measuring precision of the film thickness.

According to a second aspect of present invention, a thin semiconductor multi-layer film thickness measuring apparatus includes a spectroscopic apparatus including a light source emitting a measuring light, an interferometer emitting the emitted light from the light source as an interference light which is modulated in view of time, an optical system including light transmitting material for introducing the emitted interference light to the sample to be measured which has a thin multi-layer film laminated on a substrate, and a Michelson interferometer having a light receiving part receiving the reflection interference light from the laminated film of the material, whereby a construction of an apparatus appropriate for calculating the film thickness by the data processing is obtained.

According to a third aspect of present invention, a thin semiconductor multi-layer film thickness measuring apparatus includes a light receiving part including a plurality of photodetectors whose parts of light measuring wavenumber bands overlap with each other, whereby the light receiving sensitivity of the reflected light from the sample is increased and a more exact film thickness calculation is enabled.

According to a fourth aspect of present invention, a thin semiconductor multi-layer film thickness measuring apparatus includes a light transmitting member of an optical system including a plurality of unit members whose parts of transmitting wavenumber bands overlap with each other, whereby the in-plane intensity of the measuring light to the sample is made uniform, a more exact light measuring of the sample is enabled and a more exact film thickness calculation is enabled.

According to a fifth aspect of present invention, a thin semiconductor multi-layer film thickness measuring apparatus includes a light source which has a plurality of unit light sources emitting lights of different wavelength and emits the light which are obtained by optically synthesizing the plurality of emitted lights to produce a measuring light, whereby a photometering over a wide wavenumber range is enabled and a more exact film thickness calculation is enabled.

According to a sixth aspect of present invention, a thin semiconductor multi-layer film thickness measuring apparatus includes an optical system which irradiates the sample with the interference light as a light beam having a prescribed beam width, and the variations in the incident angle of the test light incident to the surface of the material and the variations in the incident plane are reduced, whereby Kepstrum of high precision is enabled and a more exact film thickness calculation is enabled.

According to a seventh aspect of present invention, a thin semiconductor multi-layer film thickness measuring apparatus includes a film interference spectrum operating means which performs an operation processing obtaining an interference spectrum by supplementing the wavenumber range exceeding the photometering spectrum wavenumber range with constant values while producing the interference spectrum, whereby film thickness information can be obtained from the reflection interference spectrum of a relatively narrow wavenumber range, and on the basis thereof a more exact film thickness calculation is enabled.

According to an eighth aspect of present invention, a thin semiconductor multi-layer film thickness measuring apparatus includes a Spatialgram calculating means performing a composite power reverse Fourier transformation, whereby a more exact and stable measurement of the film thickness of respective layers of the thin multi-layer film can be performed in a prescribed photometering wavenumber range, and on the basis thereof, a more exact film thickness calculation is enabled.

According to a ninth aspect of present invention, a film thickness measuring method employed in a thin semiconductor multi-layer film thickness measuring apparatus includes irradiating a semiconductor multi-layer film with a light of a wavenumber in a range from visible light to an infrared, measuring the multi-layer thickness employing a Fourier transformation film thickness measuring method measuring respective film thicknesses from a waveform analysis of the Spatial interference waveform obtained from the Fourier transformation of the interference components included in the reflected light, setting respective measured values of film thickness obtained from the waveform analysis of the Spatial interference waveform as initial values, obtaining a film interference waveform of one of wavenumber dispersion spectrum and wavelength dispersion spectrum of reflected light by numerical calculation using the optical characteristic matrix, and obtaining respective thicknesses of high precision from the waveform fitting of the calculated values with measured values. By this construction, in the waveform fitting coinciding the power reflectivity obtained by the numerical calculation utilizing the optical characteristic matrix with the interference waveform of the actual measurement, the measured values of the film thicknesses of the thin film and the upper layer or lower layer having indefinite values are deliberately changed to detect the optimum fitting waveform. Therefore, even when the interference fringe of the thin film part is included only by one half thereof in the measuring wavenumber range, the waveform fitting of the interference waveform of the entire multi-layer film parts is enabled and a measurement of a thin film not limited within the measuring wavenumber range is enabled.

According to a tenth aspect of present invention, a film thickness measuring method employed in a thin semiconductor multi-layer film thickness measuring apparatus, the refractive index dispersion and the wavenumber dispersion data of respective layers of the multi-layer film are stored, the reflected light from the lower layer film is successively spectroscopically measured in a range from the visible light to the far infrared light by the spectroscopic apparatus, the optical transmitting characteristic of the spectroscopic apparatus is removed from this spectroscopied spectrum to produce an interference spectrum only including the multi-layer film interference component, the interference spectrum only included the multi-layer film interference component is stored, only the sensitivity wavenumber band of the interference spectrum from which the optical transmitting characteristics of the spectroscopic apparatus is removed is reverse Fourier transformed to calculate a Spatialgram, this Spatialgram is stored, the side burst peak position of the Spatialgram is read out to calculate the approximate value of respective film thicknesses, these approximate values of respective film thicknesses are stored, the theoretical interference spectrum is obtained from the characteristic matrix calculation performed on the basis of the film thickness approximate data and, the refractive index distribution and wavenumber dispersion data of respective layers, the film thickness set values of respective layers are changed so as to minimize the difference between the measured interference spectrum and the theoretical interference spectrum, and the theoretical interference spectrum is recalculated to assume the real film thickness at high precision. Accordingly, an apparatus which obtains the approximate values of film thicknesses, produces the theoretical interference spectrum waveforms from the numerical calculation of the optical characteristic matrix, and performs the waveform fitting with the original interference spectrum waveform while changing the film thickness, thereby providing an enhanced measurement precision of film thickness is obtained.

### Brief Description of the Drawings

Figures 1(a) and 1(b) are diagrams illustrating a thin semiconductor multi-layer film thickness measuring apparatus according to a first embodiment of the present invention, in which figure 1(a) is a block diagram illustrating a schematic construction and figure 1(b) is a flowchart schematically illustrating the processing.

Figure 2 is a block diagram illustrating a detailed construction of the thin semiconductor multi-layer film thickness measuring apparatus of figure 1.

Figure 3 is a flowchart illustrating the flow of processing of the recalculating means of figure 2.

Figures 4(a) and 4(b) are diagrams illustrating a prior art thin semiconductor multi-layer film thickness measuring apparatus, in which figure 4(a) is a block diagram showing a schematic construction and figure 4(b) is a flowchart schematically showing the processing performed.

Figure 5 is a block diagram illustrating a detailed construction of the thin semiconductor multi-layer film thickness measuring apparatus of figure 4.

Figure 6 is a diagram illustrating the reflection light path of only the primary reflected light at the respective layers of the light flux incident to the sample obtained by the reflection photometering system of the Michelson interferometer.

Figure 7 is a diagram illustrating the film interference waveform in the wavenumber space according to the film thickness measuring example of the first embodiment of the present invention.

Figure 8 is a diagram illustrating the Spatialgram obtained by reverse Fourier transformation of the interference waveform of figure 7 in the film thickness measuring example according to the present invention.

Figures 9(a), 9(b), and 9(c) are diagrams illustrating the waveform fittings by the numerical calculation into the actual measured interference waveform in the film thickness measuring example according to the embodiment of the present invention.

Figure 10 is a diagram illustrating a light collecting light flux type FTIR film thickness evaluating apparatus disclosed in Japanese Published Patent Application No. Hei.3-110405.

Figure 11 is a diagram illustrating a Spatialgram.

Figure 12 is a diagram illustrating a construction of a composite type photodetector disclosed in Japanese Published Patent Application No. Hei.4-109798.

Figure 13 is a diagram illustrating a construction of another composite type photodetector disclosed in Japanese Published Patent Application No. Hei.4-109798.

Figure 14 is a diagram illustrating a construction of a still another composite type photodetector disclosed in Japanese Published Patent Application No. Hei.4-109798.

Figure 15 is a diagram illustrating a table of existing characteristics wavenumber range of the various light sources, photodetectors, and beam splitters disclosed in Japanese Published Patent Application No. Hei.4-109798.

Figure 16 is a diagram illustrating a construction of a composite type beam splitter as a light transmitting material of the semiconductor film thickness measuring apparatus disclosed in Japanese Published Patent Application No. Hei.4-109798.

Figure 17 is a diagram illustrating a construction of a light source of the semiconductor film thickness measuring apparatus disclosed in Japanese Published Patent Application No. Hei.4-109798.

Figure 18 is a flowchart illustrating the content of the processing performed by the data processing apparatus in the semiconductor film thickness measuring apparatus disclosed in Japanese Published Patent Application No. Hei.4-109798.

Figure 19 is a diagram illustrating the film interference spectrum to which the processing of figure 18 is to be performed.

Figure 20 is a diagram illustrating the result obtained by performing the processing of figure 18 on the film interference spectrum shown in figure 19.

Figure 21 is a diagram illustrating the Spatialgram obtained by performing a data interpolation by the processing of figure 18.

Figure 22 is a diagram illustrating the power spectrum corresponding to the Spatialgram shown in figure 21.

Figure 23 is a flowchart showing the content of the processing performed by the data processing apparatus in the semiconductor film thickness measuring apparatus disclosed in Japanese Published Patent Application No. Hei.4-120404.

Figure 24 is a diagram illustrating a space interference waveform which is obtained by performing the processing shown in figure 23.

### DETAILED DESCRIPTION OF THE PREFERRED EMBODIMENT

### Embodiment 1.

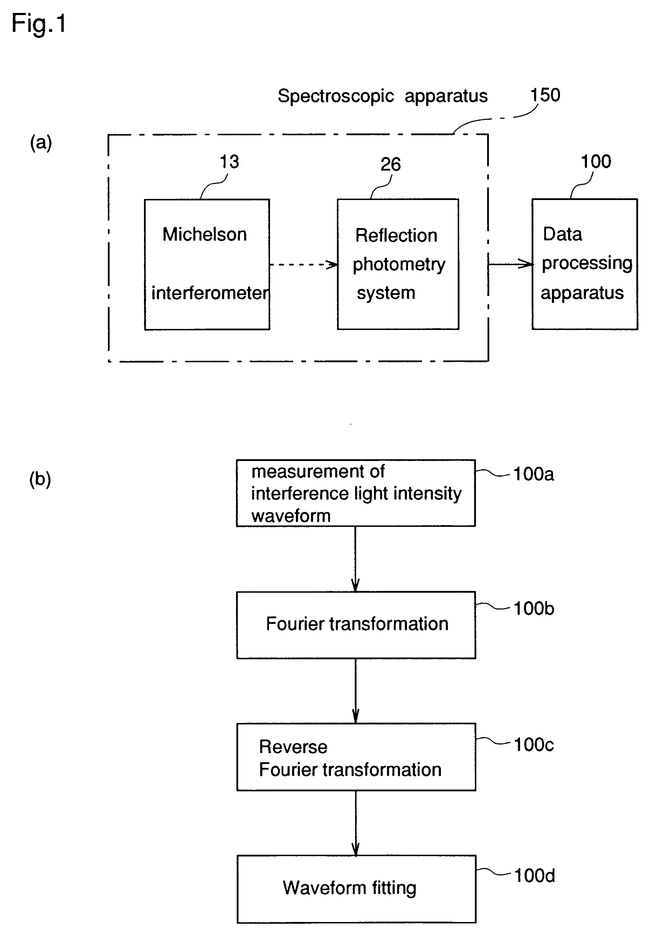

A description is given of an embodiment of the present invention. Figure 1(a) illustrates an apparatus for measuring film thickness of a thin semiconductor multi-layer film according to a first embodiment of the present invention.

In figure 1(a), reference numeral 13 designates a Michelson interferometer generating an interference light flux. Reference numeral 26 designates a photometry system for performing photometering by irradiating the measuring light from the interferometer 13 to a sample. Reference numeral 150 designates a spectroscopic apparatus comprising the Michelson interferometer 13 and the photometry system 26, for spectrometering the reflected light from the multi-layer film continuously from the visible light to the infrared light. Reference numeral 100 designates a data processing apparatus for Fourier transforming the electric signal which is obtained by photo metering the measured light by the photometry system 26 of the spectroscopic apparatus 150 and photo-electricity converted by the optical detector belonging to the photometry system 26 to perform spectroscopying processing. As the Michelson interferometer, one of a type in which parallel light beam is incident to the sample as shown in figure 10 is employed.

Figure 1(b) shows a flowchart illustrating data processing performed by this data processing apparatus 100. In this figure, reference numeral 100a designates a step of measuring film interference spectrum, reference numeral 100b designates a step of Fourier transforming the film interference spectrum measured by the step 100a, reference numeral 100c designates a step of reverse Fourier transforming the result of the Fourier transformation at the step 100b. Reference numeral 100d designates a step of performing waveform fitting on the result of the reverse Fourier transformation at the step 100c by coinciding the interference spectrum waveform obtained by the actual measured value with that of the calculated result.

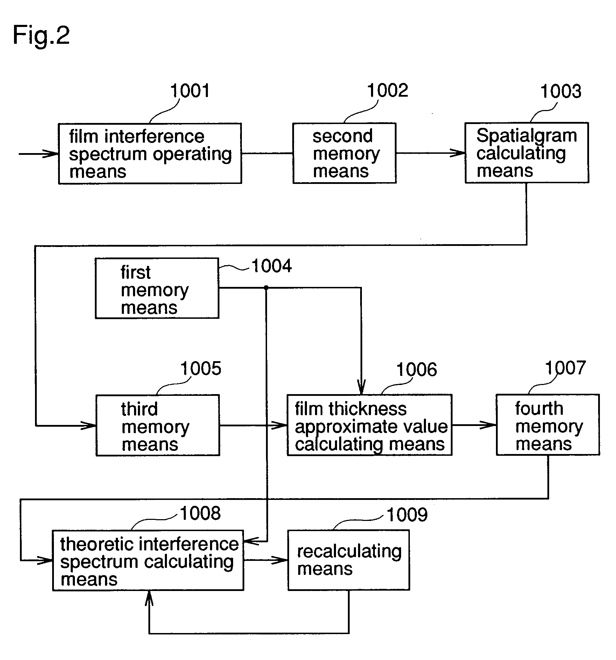

Figure 2 is a block diagram illustrating a construction of this data processing apparatus. In the figure, reference numeral 1001 designates a film interference spectrum operating means for removing the optical transmitting characteristic of the spectroscopic apparatus from the spectroscopied spectrum to take out only the multi-layer film interference components. Reference numeral 1002 designates a second memory means for storing the interference spectrum of the multi-layer film interference components taken out by the film interference spectrum operating means. Reference numeral 1003 designates a Spatialgram calculating means for reverse Fourier transforming only the sensitive wavenumber band of the interference spectrum to obtain a Spatialgram by the calculation. Reference numeral 1004 designates a first memory means for storing refractive index distribution and wavenumber dispersion data of the multi-layer film. Reference numeral 1005 designates a third memory means for storing data calculated by the Spatialgram calculating means 1003. Reference numeral 1006 designates a film thickness approximate value calculating means for reading out the refractive indices and wavenumber dispersion data of respective layers of the multi-layer film stored in the first memory means 1004 and the side burst peak positions of the Spatialgram stored in the third memory means 1005 to obtain approximate values of respective film thickness. Reference numeral 1007 designates a fourth memory means for storing the approximate value of the film thickness calculated by the film thickness approximate value calculating means 1006. Reference numeral 1008 designates a theoretical interference spectrum calculating means for calculating the theoretical interference spectrum by the characteristic matrix calculation on the basis of the film thickness approximate data. Reference numeral 1009 designates a recalculating means for comparing the actual measured value of the interference spectrum and the theoretical interference spectrum and changing the film thickness set values of respective layers so as to minimize the difference between the both spectra, and recalculating the theoretical interference spectrum.

The thin semiconductor multi-layer film measuring apparatus of this first embodiment combines the burst peak analysis method on the Spatialgram and the fringe waveform analysis method on the interference waveform in the wavenumber (wavelength) space so as to combine the advantages and supplement the disadvantages with each other.

More particularly, firstly by the burst peak analysis in the Spatialgram, the film thickness of a layer which can be measured by this method, and the total film thickness of a thin layer which cannot be measured by this method and an upper and lower layer putting between the thin layer are measured.

Secondly, assuming the film thickness information obtained at the first step as an initial value, the interference waveform in the wavenumber (wavelength) space applying the multi-layer film reflection analysis method utilizing a series of optical characteristic matrix methods shown in the following are obtained by calculation, and this is fitted with the interference waveform obtained by the measurement employing the film thickness of the thin layer and the film thicknesses of upper and lower layer which are indefinite as parameters, whereby the film thickness of the thin layer which cannot be measured at the first step is obtained.

In this embodiment, the waveform fitting which make coincide the power reflectivity obtained by the numerical calculation employing an optical characteristic matrix with that of the interference waveform of the actual measurement is performed, and the measurement values of the thin film and the film thicknesses of the upper and lower layer which are indefinite are changed intentionally to find the optimum fitting waveform, to increase the precision of the film thickness. Therefore, even when only below one interference fringe of the thin film portion is included half in the measurement wavenumber range, the waveform fitting of the interference waveform of the entire multi-layer film is enabled, whereby the measurement of a thin film, which is not limited within the measurement wavenumber range is enabled.

A description is given of the operation with reference to figures 1 and 2. First of all, the interference light flux irradiated to the sample by the Michelson interferometer 13 is received by the photodetector included in the reflection photometry system 26 to be converted into an electric signal.

The electric signal converted by this photodetector is input to the data processing apparatus 100, in which the film interference spectrum is measured (at step 100a), the measured result is Fourier transformed (at step 100b), a prescribed filtering processing is performed thereon, and the filtering processing result is reverse Fourier transformed to obtain a Spatialgram (at step 100c). Then, the film thickness of a thin film to be obtained from the interval of the burst peaks in the Spatialgram is detected. By carrying out an optical characteristic matrix operation on the basis of the approximate value of the film thickness, a theoretical interference spectrum is obtained, waveform fitting between the theoretical interference spectrum and the actual measured interference spectrum is performed varying the film thickness with a predetermined interval, and a film thickness that produces the theoretical interference spectrum which is closer to the waveform configuration of the actual measured value is obtained (at step 100d).

A detailed description is given of the processing of this data processing apparatus. First of all, the reflected light of the multi-layer film formed on the sample is spectroscopically measured continuously over a range from the visible light to the far infrared light by the spectroscopic apparatus, the optical transmitting characteristic of the spectroscopic apparatus is removed from the spectroscopied spectrum by the film interference spectrum operating means 1001, to take out only the multi-layer film interference component. The interference spectrum on the multi-layer interference component taken out by this film interference spectrum operating means 1001 is stored in the second memory means 1002, and only the sensitive wavenumber region of this interference spectrum is reverse Fourier transformed by the Spatialgram calculating means 1003 to obtain the Spatialgram by calculation. The data calculated by the Spatialgram calculating means 1003 is stored in the third memory means 1005.

The side burst peak position of the Spatialgram is taken out by the film thickness approximate value calculating means 1006, the refractive indices and the wavenumber dispersion data of respective layers of the multi-layer film are taken out from the first memory means 1004 to obtain approximate values of respective film thicknesses to store the same in the fourth memory means 1007, and a theoretical interference spectrum is calculated by the theoretical interference spectrum calculating means 1008 from the characteristic matrix calculation performed on the basis of the film thickness approximate data. Then, the recalculating means 1009 compares the interference spectrum and the theoretical interference spectrum and changes the film thickness set values of respective layers so as to minimize the difference between them, and make the theoretical interference spectrum calculating means 1008 recalculate the theoretical interference spectrum.

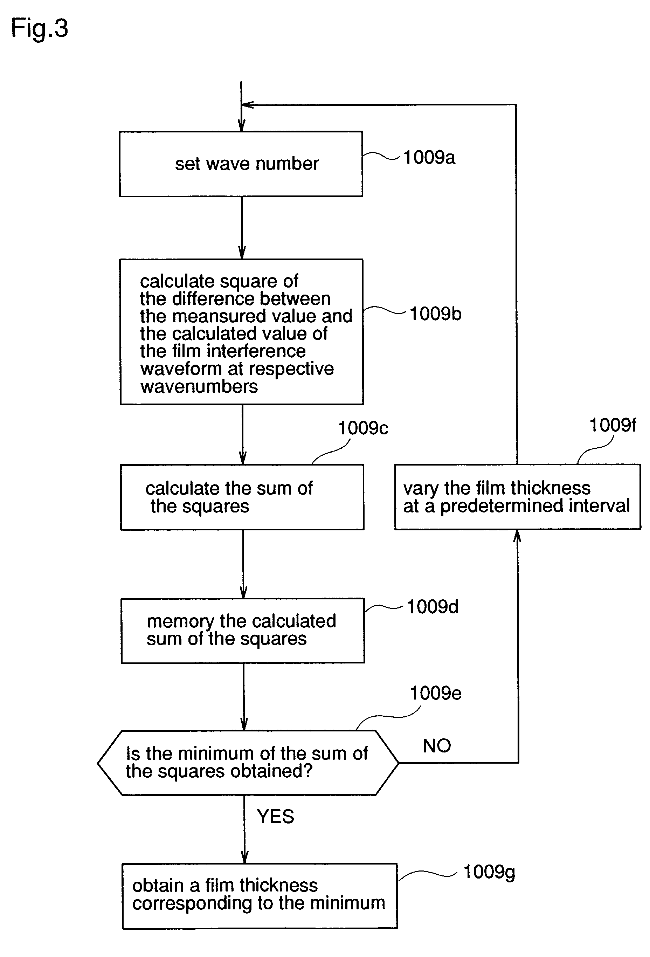

Figure 3 shows a flowchart illustrating the recalculating procedure performed by the recalculating means.

In the figure, reference numeral 1009a designates a step of setting the wavenumber. Reference numeral 1009b designates a step of obtaining a square of the difference between the actual measured value and the calculated value of the film interference waveform in respective wavenumbers. Reference numeral 1009c designates a step of obtaining a sum of the squares of the difference between the actual measured value and the calculated value of the film interference waveform in respective wavenumbers. Reference numeral 1009d designates a step of obtaining the square sum. Reference numeral 1009e designates a step of judging whether the minimum value of the square sum is obtained or not. Reference numeral 1009f designates a step of returning to the step 1009a with increasing or decreasing the film thickness by a predetermined interval when the minimum value of the square sum is not obtained. Reference numeral 1009g designates a step of obtaining a film thickness corresponding to the minimum value when the minimum value is obtained at the step 1009e.

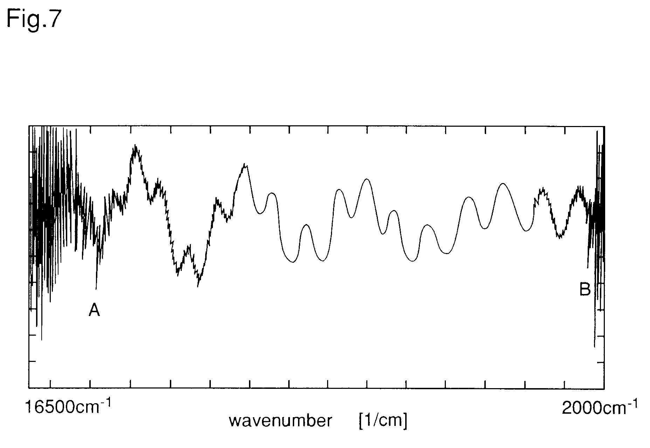

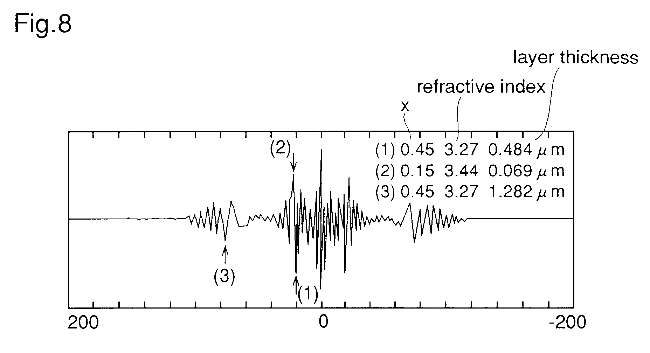

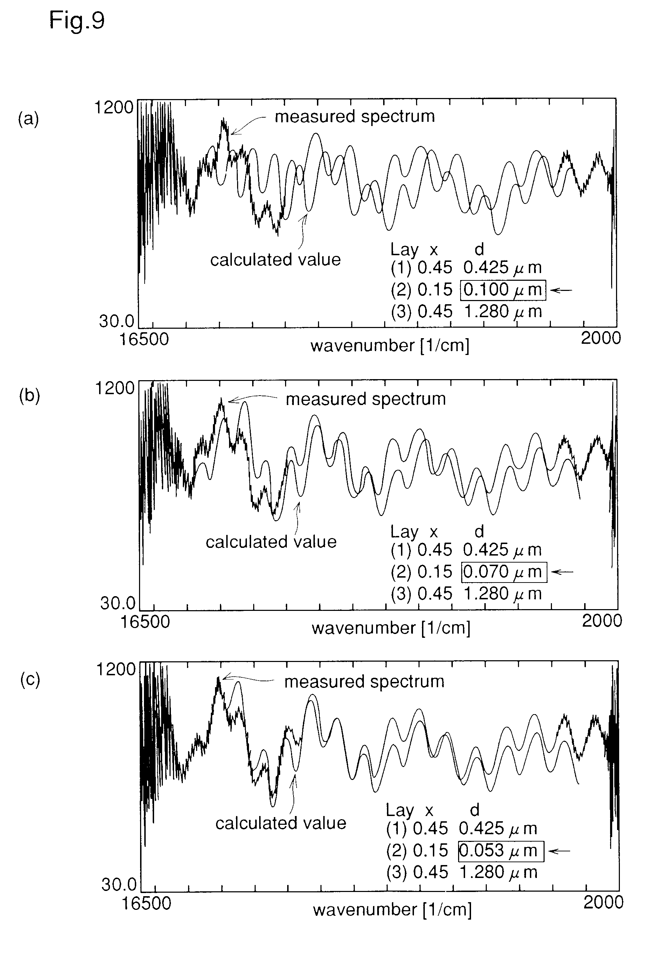

Figures 9(a), 9(b), and 9(c) are diagrams illustrating film interference waveforms in the wavenumber space which are obtained from measuring the three layer structure of AlₓGa₁₋ₓAs layers 2 to 4 (in layer 2, Al composition x is 0.45, in layer 3, x is 0.15, in layer 4, x is 0.45) which are successively laminated on the GaAs substrate shown in figure 6 by means of the prior art FTIR apparatus shown in figure 4. In this figure 7, the interference waveform is measured over the wavenumber 15500 cm⁻¹ (point A in figure 7) to 2300 cm⁻¹ (point B in figure 7). Figure 8 shows a Spatialgram that is obtained by reverse Fourier transforming the region from A to B of this interference waveform. In this figure 8, the mixed composition ratios of the first layer 2 to the third layer 4 are respectively 0.45, 0.15, and 0.45, the refractive indices are respectively 3.27, 3.44, and 3.27, the calculated values of the film thickness are respectively 0.484 µm, 0.069 µm, and 1.282 µm. In the figure 8, burst peaks corresponding to the interface reflection at the respective layers appear. However, the peak corresponding to the film thickness (d₂=0.55 µm) of the second layer 3 (x=0.15) overlaps with the peak corresponding to the first layer (x=0.45, d₂=0.43 µm) 2, and a correct peak separation is not performed.

In this embodiment, by the same processing as the processing performed by the prior art FTIR apparatus as described above, the film thickness information as shown in figure 8 is obtained, and in addition thereto, by making the film thickness information obtained from the above processing as an initial value and performing a numerical calculation employing the optical characteristic matrix using the formulae (4) to (7), the waveform configuration of the theoretical interference spectrum is obtained, and waveform fitting of the waveform configuration of the theoretical interference spectrum with the waveform configuration of the actual measured interference spectrum is performed, thereby obtaining a more exact film thickness of a thin film.

When the multi-layer film of n pieces of layer structure is represented by employing the optical characteristic matrix, assuming the optical characteristic matrix of the n-th layer is Mₙ and the optical characteristic matrix of the total n layer Mⁿ, the following stand. 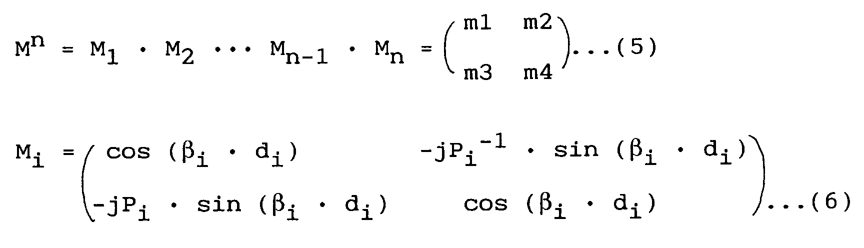
${\text{β}}_{\text{i}} \text{= 2π·} \overline{{\text{n}}_{\text{i}}} {\text{·cosϑ}}_{\text{i}} \text{/λ}$ (λ : wavelength of incident light)
${\text{P}}_{\text{i}} \text{=} \overline{{\text{n}}_{\text{i}}} {\text{·cosϑ}}_{\text{i}}$ (ϑᵢ : incident angle to the i-th layer)
$\overline{{\text{n}}_{\text{i-1}}} {\text{·sinϑ}}_{\text{i-1}} \text{=} \overline{{\text{n}}_{\text{i}}} {\text{·sinϑ}}_{\text{i}}$
$\overline{{\text{n}}_{\text{i}}} {\text{= n}}_{\text{i}} {\text{-jk}}_{\text{i}}$
($\overline{{\text{n}}_{\text{i}}}$ : complex refractive index of i-th layer
nᵢ : real refractive index of i-th layer
kᵢ : attenuation coefficient of i-th layer)
j : imaginary unit 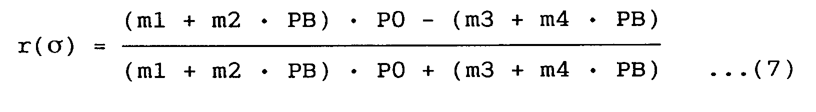
r = amplitude reflectance σ = 1/λ : wavenumber

$\text{R(σ) = r·r* (8)}$

R = power reflectivity
r* = complex conjugate of r
${\text{P}}_{\text{B}} \text{=} \overline{{\text{n}}_{\text{s}}} {\text{·cosϑ}}_{\text{s}}$ (ϑₛ : incident angle to substrate)
$\overline{{\text{n}}_{\text{s}}} {\text{= n}}_{\text{s}} {\text{-jk}}_{\text{s}}$
($\overline{{\text{n}}_{\text{s}}}$ : complex refractive index of substrate,
nₛ : real refractive index of substrate,
kₛ : attenuation coefficient of substrate)
$\text{P₀ = n₀·cosϑ₀}$
(ϑ₀ = incident angle to substrate,
n₀ = refractive index of air)
When fitting of an interference waveform is performed to these formulae (5) to (8) employing the parameters shown in the formula (9) with making n=3, the result is shown in figures 9(a) to 9(c). 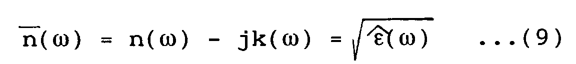
$\text{ω = f/2π}$ f : frequency of light
$\hat{\text{ε}} \text{(ω) = ε₁(ω) - jε₂(ω)}$ 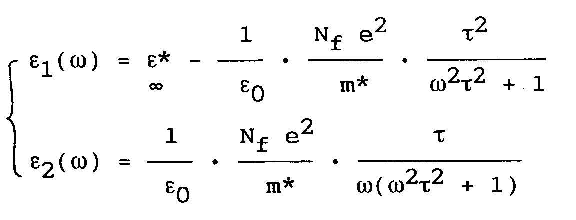
m* : effective mass of electron in crystal ≃ 0.068 m₀
(m₀ : mass of electron in vacuum, 9.11 x 10⁻³¹ [kg])
N_{f} : carrier concentration in crystal $\text{≃10¹⁷ cm⁻³ τ=m · µ/e}$
µ : mobility of carrier in crystal ∼ 300 [cm/V·S]
ε$\frac{\text{*}}{\text{∞}}$ : relative dielectric constant of real part of crystal at high frequency limit≃12
ε₀ : dielectric constant in vacuum = 8.8542 x 10⁻¹² [F/m] ϑi≃5°
This waveform fitting can be performed by the method as shown in figure 3 as in the following:

A wavenumber is set (at step 1009a), a square of the difference between the actual measured value and the calculated value of the film interference waveform in this wavenumber is obtained (at step 1009b), and a sum of the squared values at respective wavenumbers are obtained (at step 1009c). The square sum is stored (at step 1009d), and whether the minimum value of the squared sum is obtained or not is judged (at step 1009e). Then, the film thickness is increased or decreased at a predetermined interval (at step 1009f), and the above processing is repeated to obtain the minimum square sum. Then, the film thickness corresponding to the minimum value of this square sum is obtained (at step 1009g). This is the film thickness of the triple layer film assumed in this embodiment.

The manner of advance of this waveform fitting will be described with reference to figure 9.

In this figure 9, the waveform shown by a fat line represents the film interference waveform by actual measurement, and the waveform shown by a thin line represents film interference waveform calculated from the formulae (4) to (7). According to this figure 9, by converging the film thickness of the second layer by gradually reducing the same from 0.1 µm shown in figure 9(a) to 0.070 µm shown in figure 9(b), and further to 0.053 µm shown in figure 9(c), the interference waveform of the entire three layer film can be made reproducible faithfully.

Accordingly, as shown in figure 3 described above, by decreasing or increasing the film thickness at a prescribed interval so that the sum of the squares of the differences between the calculated spectra and the actual measured spectra in respective wavenumbers to be the minimum value, and making the film thickness at which the film interference waveform obtained by the calculation and the actual measured film interference waveform are closest to each other a film thickness to be obtained, it is possible to precisely assume the film thickness of the second layer and further the respective film thicknesses are of the first and third layer correctly that were impossible to be measured by the prior art method.

Although there is seen a little deviation between the theoretical calculated waveform and the actually measured waveform shown in figure 9(c), by making efforts of such as making the waveform dispersion characteristic of the complex refractive indices of respective semiconductor crystals as material constants and data of such as free carrier absorption close to those of practical ones, a further high precision waveform fitting can be realized.

In this way, according to this embodiment, on the basis of the Fourier transformation infrared spectroscopic method, a semiconductor multi-layer film is irradiated with a light of wavenumber range from a visible light to an infrared band, and from the waveform analysis of the space interference waveform that is obtained by Fourier transformation of the film interference component in the reflected light, the film thickness of the thin multi-layer film of a semiconductor device is measured employing a Fourier transformation thin multi-layer film thickness measuring method, and then the respective film thickness measured values obtained from the waveform analysis of the space interference waveform are made initial values to obtain the film interference waveform of the wavenumber dispersion (wavelength dispersion) spectrum of the reflected light employing the numerical calculation using the optical characteristic matrix, and this is waveform fitted with actual measured value to obtain further high precision respective film thicknesses. Therefore, even when the interference fringe of the thin film part is only included by about one half thereof in the measuring wavenumber range, a sufficient film thickness resolution of a thin film is obtained by waveform fitting of the interference waveform of the entire multi-layer film, and a measurement which was entirely impossible in the prior art method is enabled.

In other words, the splitting limit of the burst peak on the Spatialgram is as described above determined by the continuous photometering wavenumber range Δ which is determined by light transmitting characteristics of the optical system and the material absorption of the multi-layer film as a material to be measured. This is equivalent to the wavenumber corresponding to a reverse number of the optical path length of one forwarding path of the infrared light in the film (n · d) of the light transmitting the thin film, and it means that one or more fringes of the wavenumber (wavelength) Spatial interference waveform of a thin monolayer are required to be included in the measuring wavenumber range. According to this embodiment, in the waveform fitting method of (wavelength) Spatial interference waveform, by performing a Fourier transformation, the approximate value of the film thickness is measured, the original interference fringe is accurately reproduced utilizing the optical characteristic matrix, whereby the precision in the film thickness measurement is enhanced. Therefore, even if the interference fringe of a thin film part is only included by one half thereof in the measuring wavenumber range, a sufficient film thickness resolution of a thin film is obtained in the waveform fitting of an interference waveform of the entire multi-layer film, thereby enabling the measurement which was entirely impossible in the prior art method.

Although this is the combination of the prior art techniques, this cannot be realizable on the basis of only each of respective techniques.

More particularly,
(1) By only the fringe peak analysis method of the wavenumber (wavelength) Spatial interference waveform, the film thickness measurement of the multi-layer film of more than two layer is impossible.
(2) Even when the fitting of the wavenumber (wavelength) Spatial interference waveform employing the optical characteristic matrix analysis is tried to start from the first step, because the order of the film construction of the multi-layer film and the initial values of the film thickness of all the layers at the start of the fitting are indefinite, the analysis is difficult and the put into practice of that is impossible.
(3) The separating limit of the burst peak on the Spatialgram has a limit of about 0.1 µm due to the physical limitation as described above.

In the above illustrated embodiment, since the parallel light flux is incident to the sample as described above, by irradiating a sample with the measured light not being collected toward the substrate but in parallel light beam, variations in the incident angle to the sample and variations in the incident plane are reduced. Thus it is possible to carry correct information of the thin multi-layer film on the obtained Kepstrum, whereby an exact information is obtained as information to be processed by the data processing apparatus. Thus, an improved measuring precision of film thickness is obtained.

### Embodiment 2.

While in the above-described first embodiment the precision of film thickness measurement is improved by combining the FTIR method with an interference waveform analysis by the optical characteristic matrix analysis, by using those which have wavenumber characteristic ranges overlapping with each other for the improved optical parts and light sources, optical systems, and light receiving parts as shown in figure 12 to figure 17, respectively, which are disclosed in Japanese Published Patent Application No. Hei.4-109798, the optical detection sensitivity of FTIR method can be increased, whereby the film thickness measurement can be carried out exactly.

### Embodiment 3.

In the above-described second embodiment the precision of film thickness measurement is improved by combining the FTIR method and the interference waveform analysis employing the optical characteristic matrix analysis. As shown in figure 10 disclosed in Japanese Published Patent Application No. Hei.3-110405, by when a photometering light beam employing one which is not collected to the substrate but irradiates the substrate as a parallel light beam is employed so as to reduce variations in the incident angle to the sample or variations in the incident plane, which light beam can include exact information of the thin multi-layer film in the obtained Kepstrum, it is possible to increase the optical detection sensitivity of FTIR method, thereby performing the film thickness measurement accurately.

### Embodiment 4.

In the above-described second and third embodiments the spectroscopic apparatus is improved to enhance the precision in the film thickness measurement. By employing a data processing apparatus which has improved the measurement precision by efficiency taking out film thickness information from the reflection interference spectrum of a relatively narrow wavenumber band by performing the Fourier transformation after adding data of a constant value prior to the Fourier transformation as shown in figures 18 to 22 disclosed in Japanese Published Patent Application No. Hei.4-66806, the measuring precision can be further increased.

### Embodiment 5.

In the above-described fourth embodiment the film thickness measurement precision is enhanced by improving the processing of the Fourier transformation in the data processing apparatus. By using one which can measure the film thicknesses of respective layers of much thinner thin multi-layer film exactly and stably at a prescribed photometering wavenumber band by performing a complex power reverse Fourier transformation as a reverse Fourier transformation as shown in figures 23 and 24 which are taken from Japanese Published Patent Application No. Hei.4-120404, the measuring precision can be further increased.

### Embodiment 6.

By performing an interference waveform analysis employing the optical characteristic matrix with combining the improvement of the reverse Fourier transformation processing in the fifth embodiment and the improvement in the interpolation of data in the fourth embodiment or the improvement of the optical system in the second and third embodiments, it is possible to perform film thickness measurement of having a measurement limit of 0.05 ± 0.01 µm securely which is a half of the measuring limitation of 0.1 µm in the prior art method. Accordingly, even when the interference fringe of the thin film part is only included by one half in this measuring range, a sufficient measurement of film thickness of the thin film can be performed.

## Claims

1. An apparatus for measuring thickness of a thin semiconductor multi-layer film, comprising:
means for irradiating a semiconductor multi-layer film with a light of a wavenumber in a range from visible light to an infrared;
means for measuring thickness of respective layers of said multi-layer film employing a Fourier transformation film thickness measuring method measuring respective film thicknesses from a waveform analysis of the Spatial interference waveform that is obtained from the Fourier transformation of interference components included in the reflected light;
means for setting respective measured values of film thickness obtained from the waveform analysis of the Spatial interference waveform as initial values;
means for obtaining a film interference waveform of one of wavenumber dispersion spectrum and wavelength dispersion spectrum of reflected light from numerical calculation performed using the optical characteristic matrix;
a data processing apparatus for obtaining respective thicknesses of high precision from waveform fitting of said calculated values with the measured values.

2. An apparatus for measuring thickness of a thin semiconductor multi-layer film, comprising:
a first memory means for storing refractive index distribution and wavenumber dispersion data of respective multi-layer film;
a spectrometer for continuously measuring the reflected light from the underlying layer film over a range from visible light to far infrared light;
a film interference spectrum operating means for eliminating the optical transmission characteristic of the spectrometer from the spectroscopied spectrum measured by the spectrometer and producing an interference spectrum including only multi-layer film interference components;
a second memory means for storing an interference spectrum including only multi-layer film interference components produced by the film interference spectrum operating means;
a Spatialgram calculating means for reverse Fourier transforming only a sensitive wavenumber range of an interference spectrum excluding the optical transmission characteristic of the above-described spectrometer and calculating a Spatialgram;
a third memory means for storing the Spatialgram calculated by the Spatialgram calculating means;
a film thickness approximate value calculating means for reading out side burst peaks of the above-described Spatialgram and the refractive index distribution of respective layers stored at the first memory means and calculating approximate values of respective film thicknesses;
a fourth memory means for storing approximate values of respective layers calculated by the film thickness approximate value calculating means;
a theoretical interference spectrum calculating means for obtaining a theoretical interference spectrum from the characteristic matrix calculation that is performed based on the film thickness approximate value data and, the refractive index distribution of respective films and wavenumber dispersion data stored in the first memory;
recalculating means for comparing the measured interference spectrum with the theoretical interference spectrum, changing the fixed values of film thickness of respective layers so as to lessen the difference between the both spectra and recalculating the above-described theoretical interference spectrum, thereby to assume a film thickness of high precision.

3. The apparatus for measuring thickness of a thin semiconductor multi-layer film of claim 2, wherein said spectrometer comprises:
a light source emitting light;
an interferometer producing modulated interference light by modulating the light emitted from said light source in view of time;
an optical system including a light transmission member for introducing the modulated interference light into a measurement sample comprising a thin multi-layer film formed on a substrate; and
a light receiving means for receiving the modulated interference light reflected from the film and producing an output signal in response.

4. The apparatus for measuring thickness of a thin semiconductor multi-layer film of claim 3 wherein said light receiving means comprises a plurality of light detectors having respective photometric wavenumber ranges that overlap with each other.

5. The apparatus for measuring thickness of a thin semiconductor multi-layer film of claim 3 wherein said light transmission member of said optical system comprises a plurality of unit members having respective transmission wavenumber ranges that overlap with each other.

6. The apparatus for measuring thickness of a thin semiconductor multi-layer film of claim 3 wherein said light source comprises a plurality of unit light sources respectively emitting lights of different wavelengths, and outputting a light beam as a measurement light obtained from optically synthesizing the respective emitted lights.

7. The apparatus for measuring thickness of a thin semiconductor multi-layer film of claim 3 wherein said optical system is one emitting said interference light into said sample as a parallel beam having a predetermined beam width.

8. The apparatus for measuring thickness of a thin semiconductor multi-layer film of claim 2 wherein said film interference spectrum operating means is one performing an operation processing obtaining an interference spectrum by supplementing a wavenumber range exceeding the wavenumber range of photometry spectrum with a constant value during producing an interference spectrum,

9. The apparatus for measuring thickness of a thin semiconductor multi-layer film of claim 2 wherein said Spatialgram calculating means is one carrying out a complex power reverse Fourier transformation as said reverse Fourier transformation.

10. A method for measuring thickness of a thin semiconductor multi-layer film, comprising:
irradiating a semiconductor multi-layer film with a light of wavenumber range from visible light to infrared;
measuring respective film thicknesses employing a Fourier transformation multi-layer thickness measuring method measuring respective film thickness from a waveform analysis of the spatial interference waveform that is obtained from the Fourier transformation of interference components included in the reflected light;
setting respective measured values of film thickness obtained from the waveform analysis of the Spatial interference waveform as initial values;
obtaining a film interference waveform of one of wavenumber dispersion spectrum and wavelength dispersion spectrum of reflected light from numeral calculation using the optical characteristic matrix; and
obtaining respective thicknesses of high precision from waveform fitting of said calculated values with the measured values.

11. A method for measuring thickness of a thin semiconductor multi-layer film, comprising:
storing refractive index distribution and wavenumber dispersion data of respective multi-layer films;
spectrometering reflected light from the lower layer film over a range from visible light to far infrared light continuously by a spectroscopic apparatus;
producing an interference spectrum by eliminating the optical transmission characteristic of the spectrometer from the spectroscopied spectrum and taking out only multi-layer film interference components;
storing the interference spectrum obtained by taking out only the multi-layer interference components;
calculating a Spatialgram obtained from performing a reverse Fourier transformation on only a sensitive wavenumber range of the interference spectrum from which the optical transmission characteristic of the spectrometry apparatus is eliminated;
storing said Spatialgram;
reading out the side burst peaks of the above-described Spatialgram and refractive index distribution of respective layers and calculating approximate values of respective film thicknesses;
storing the approximate values of respective film thicknesses;
calculating theoretical interference spectrum from the characteristic matrix calculation performed based on the film thickness approximate value data and, refractive index distribution and wavenumber dispersion data of respective layers; and
comparing the interference spectrum with the theoretical interference spectrum, changing the fixed values of film thickness of respective layers so as to lessen the difference between the both spectra and recalculating the above-described theoretical interference spectrum, thereby to assume a film thickness of high precision.

12. The method for measuring thickness of a thin semiconductor multi-layer film of claim 11 wherein said spectroscopic apparatus comprises:
a light source emitting light;
an interferometer producing modulated interference light by modulating the light emitted from said light source in view of time;
an optical system including a light transmission member for introducing the modulated interference light into a measured sample comprising a thin multi-layer film formed on a substrate; and
a light receiving means for receiving the modulated interference light reflected from the film and producing an output signal in response.

13. The method for measuring thickness of a thin semiconductor multi-layer film of claim 12 wherein said light receiving means comprises a plurality of light detectors having respective photometric wavenumber ranges that overlap with each other.

14. The method for measuring thickness of a thin semiconductor multi-layer film of claim 12 wherein said light transmission member of said optical system comprises a plurality of unit members having respective transmission wavenumber ranges that overlap with each other.

15. The method for measuring thickness of a thin semiconductor multi-layer film of claim 12 wherein said light source comprises a plurality of unit light sources respectively emitting lights of different wavelengths, and outputting a light beam as a measurement light obtained from optically synthesizing respective emitted lights.

16. The method for measuring thickness of a thin semiconductor multi-layer film of claim 12 wherein said optical system is one emitting said interference light to said sample as a parallel light beam having a predetermined beam width.

17. The method for measuring thickness of a thin semiconductor multi-layer film of claim 11 wherein said film interference spectrum operating means is one performing an operation processing obtaining an interference spectrum by supplementing a wavenumber range exceeding the wavenumber range of photometry spectrum with a constant value during producing an interference spectrum.

18. The method for measuring thickness of a thin semiconductor multi-layer film of claim 11 wherein said Spatialgram calculating means is one carrying out a complex power reverse Fourier transformation.
